# EUROPEAN PATENT SPECIFICATION

(11) **EP 0 607 270 B1**
(45) Date of publication and mention of the grant of the patent: **20.12.1995**
(21) Application number: 92921503.6
(22) Date of filing: 09.10.1992
(51) Int. Cl.: B62D 25/16

(54) **A DEVICE FOR CONTROL OF THE AIRSTREAMS UNDERNEATH A MOVING VEHICLE**
VORRICHTUNG ZUR REGULIERUNG DES LUFTSTROMS UNTER EINEM BEWEGENDEN FAHRZEUG
DISPOSITIF DE REGULATION DE L'AIR CIRCULANT SOUS UN VEHICULE EN DEPLACEMENT

(30) Priority: 09.10.1991 SE 9102911
(43) Date of publication of application: 27.07.1994
(73) Proprietor: AB VOLVO, 405 08 Göteborg (SE)
(72) Inventor: SEREMAK, Pawel, S-417 11 Göteborg (SE)
(74) Representative: Ferkinghoff, Claes-Göran
(86) International application number: SE9200710
(87) International publication number: WO9307040

(56) References cited:
- FR-A- 1 573 622
- GB-A- 2 172 256
- US-A- 3 591 229
- US-A- 4 653 795

## Description

The subject invention concerns a device for control of the airstreams underneath a moving vehicle, particularly vehicles having an undivided and essentially straight rear face.

When driving passenger cars on wet and dirty surfaces, particularly cars of hatch-back type or estate cars that normally are designed with a straight rear face and have a comparatively large rear window, dirt collects on said rear window as also on the the rear hatch and rear lights of the vehicle. As a rule, such collection of dirt is more inconvenient in the case of the above type of vehicles, i.e. in passenger cars of hatch-back or estate type, than in other types of passenger cars, such as sedan cars. The collected dirt seriously impairs the visibility through the rear window and also causes problems of corrosion on parts of the vehicle body that are exposed thereto, for instance locks and door handles. In addition, dirt collected on the rear hatch to some extent makes the latter more difficult to open and to close. The dirt that collects on the rear face of the vehicle as described above primarily originates from the polluted air that flows upwards from underneath the vehicle.

From GB-A-2 172 256 is known an apparatus which is designed to be applied underneath the vehicle behind the rear wheels so as to serve as a means for controlling rearwardly directed airstreams. The apparatus, which is of wing-like configuration, can direct rearwards flows of dirt-laden air downwards towards the road surface to a limited extent only in order to thus prevent excessive amounts of dirty air to be sucked upwards, along the rear face of the vehicle. The apparatus is not able to positively prevent dirt-laden air from passing towards the rear face of the vehicle.

From FR-A-1 573 622 is known a similar device for directing, in a moving vehicle, flows of air from underneath the vehicle alongside the rear face thereof for the purpose of preventing dirt from depositing thereon. The device consists of a conduit the inlet end of which, positioned underneath the vehicle, may be provided with a protective grate of some kind for the purpose of removing dirt from the air entering into the conduit. In practice, however, this device is not satisfactory. If the grate is made very dense in order to ensure that the air is kept clean, there is a serious risk that the grate will be clogged, obviously with consequential reduction in the air through-flow through the conduit. On the other hand, if the grate is made comparatively open in order to ensure satisfactory air through-flow, dirt-laden air will flow into and out of the conduit and the device will fail to produce the desired effect.

The subject invention provides a device that is significantly more efficient than prior-art devices of this kind. This has been achieved in accordance with the invention by means of a duct which is positioned underneath the rear part of a vehicle and forms a channel for through-flow therethrough of comparatively clean and dry air in a path upwards behind the rear part of the vehicle and which at the same time is designed to act as a barrier screening off the wheel arches of the rear wheels of the vehicle from the channel and deflecting the sprays of dirt and water caused by the rear wheels as they move over a wet road surface.

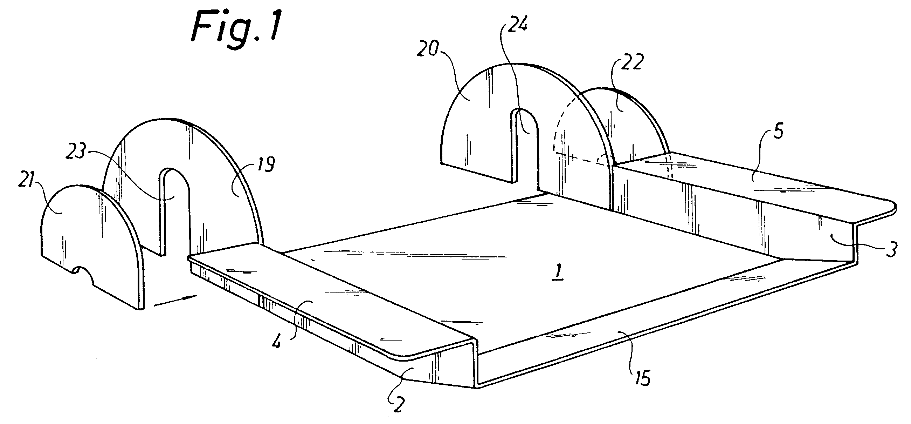

The invention in accordance with the invention will be described in closer detail in the following with reference to the accompanying drawings, wherein
Fig. 1 is a perspective view of the device,

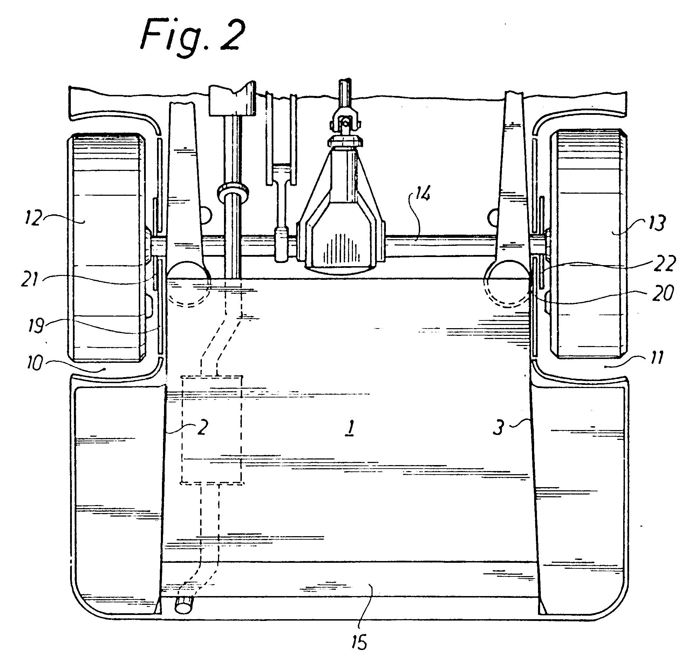

Fig. 2 is a view from below of the rear part of a passenger car provided with the device in accordance with the invention, and
Fig. 3 is a view as seen obliquely from behind of a passenger car of estate type, equipped with the device in accordance with the invention.

In accordance with the basic concept of the invention, the latter comprises a horizontal plate 1 and, at each lengthwise edge, a vertically upended plate 2 and 3. A horizontal edge portion, 4 and 5, respectively, projects from each one of the vertical plates 2, 3, said horizontal edge portions 4, 5 intended to be fastened to the bottom plating of the rear part 7 of a passenger car 6. Owing to this fastening arrangement of the structure thus described a duct 8 having a through-flow channel 9 is formed underneath the rear part 7 of the vehicle. The vertical plates 2, 3 extend to the wheel arches 10 and 11 housing the rear wheels 12 and 13, respectively, of the vehicle, and the front edge of the horizontal plate 1 preferably reaches to a point approximately in alignment with the rear axle 14 of the vehicle 6 but could also extend past the later. Additionally, the rear transverse edge portion 15 of the plate 1 is directed slightly upwards.

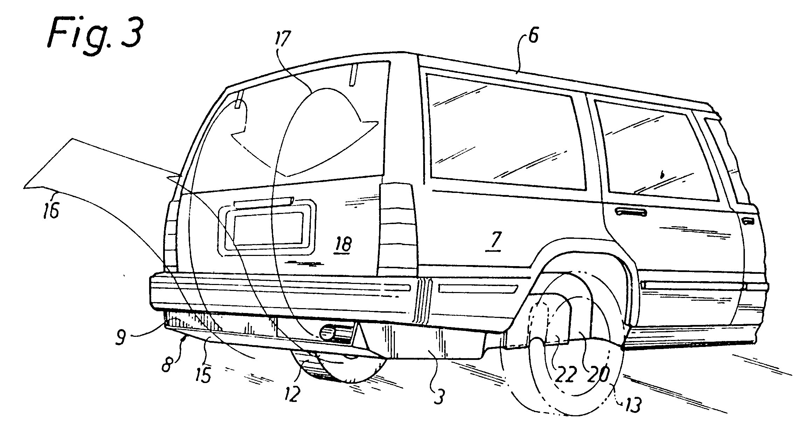

Owing to this arrangement, the duct 8 formed underneath the rear part 7 of the vehicle 6 screens off the wheel arches 10, 11 from the chassis frame of the rear vehicle part. When the vehicle 6 is moving, the device thus formed will force air flowing rearwards underneath the vehicle to be divided into two flows, indicated in Fig. 3 by arrows 16 and 17. The air flow marked 16 is a lower air flow entraining the mud-laden water splashes that are generated by the rear wheels 12, 13 as the latter are travelling over wet surfaces, and deflecting these splashes away from the vehicle 6. Owing to the device in accordance with the invention, the air flow marked 17 is a flow of drier and cleaner air which is separate from the first flow and which is deflected upwards so as to stream along the rear face 18 of the vehicle 6 as a result, on the one hand, of the negative pressure that always generates behind a moving vehicle, and on the other of the presence of the upwardly directed transverse edge portion 15. The effect of the discrete air flows is that the rear face of the vehicle 6 gets dirty at a considerably slower pace than is the case in vehicles without the device in accordance with the invention.

In accordance with a further development of the invention, a first vertical plate member 19 and 20, respectively, is positioned inside each wheel arch 10, 11, said plate members being juxtaposed with respect to their associated one of the vertical plates 2 and 3 of the duct 8. These first vertical plate members 19, 20 are arranged to serve as barriers to screen off the wheel arches 10, 11 from the bottom face of the vehicle 6 in the area of the rear axle 14.

In accordance with the invention, second vertical plate members 21 and 22, respectively, are mounted on the rear axle 14 of the vehicle adjacent the first vertical plate members 19 and 20 in the respective wheel arches 10 and 11. The second vertical plate members 21 and 22 are provided in order to close slits 23 and 24, respectively, formed in the first vertical plate members 19 and 20, respectively, in the wheel arches 10 and 11, in which slits 23, 24 the wheel axle 14 is movable. Said two plate members 19, 21 and 20, 22, respectively contribute to deflecting away mud and water from the drier and cleaner flow of air, marked by 17, as a result of their ability to efficiently screen off the wheel arches 10, 11.

It can be seen therefore that the device in accordance with the invention contributes to a safer vehicle because the rear window and the rear lights remain clean for a longer period of time than has hitherto been possible, and furthermore the device gives the added advantage that the rear hatch and its lock may be handled without smearing the operator.

The device is not limited to the embodiments described and illustrated but may be varied in many ways within the scope of the appended claims. This is true primarily of the design of the duct but obviously also as concerns the design of the plate members 19, 21 and 20, 22 in the respective wheel arches 10, 11.

## Claims

1. A device for control of the airstreams underneath a moving vehicle (6), particularly a passenger car having an undivided and essentially straight rear face, **characterized** by a duct (8) which is positioned underneath the rear part (7) of the vehicle (6) and forms a channel (9) for through-flow therethrough of comparatively clean and dry air in a path upwards behind the rear part (7) of the vehicle (6) and which at the same time is designed to act as a barrier screening off the wheel arches (10, 11) of the rear wheels (12, 13) of the vehicle (6) from said channel (9) and deflecting the sprays of mud and water caused by the rear wheels (12, 13) as they move over a wet road surface.

2. A device as claimed in claim 1, **characterized** in that the walls of the duct (8) are formed by the bottom plating of the rear part (7), by an essentially horizontal plate (1) positioned underneath said plating, and by vertical plates (2, 3), one at each lengthwise edge of the horizontal plate (1), said vertical plates (2, 3) extending to their respective one of the wheel arches (10, 11).

3. A device as claimed in any one of the preceding claims, **characterized** in that the rear face transverse edge portion (15) of the horizontal plate (1) is directed slightly upwards.

4. A device as claimed in any one of the preceding claims, **characterized** in that inside each one of the wheel arches (10 and 11, respectively) is arranged a first vertical plate member (19 and 20, respectively), said first plate members (19, 20) being juxtaposed with respect to their associated one of the vertical plates (2 and 3, respectively) of the duct (8) and arranged to screen off their associated wheel arch (10, 11) from the bottom face of the vehicle (6).

5. A device as claimed in claim 4, **characterized** in that second vertical plate members (21 and 22, respectively) are mounted on the rear axle (14) of the vehicle (6) adjacent the first vertical plate members (19 and 20, respectively) in the respective wheel arches (10, 11), said second vertical plate members (21, 22) being arranged to close slits (23 and 24, respectively) formed in the first vertical plate members (19 and 20, respectively) in the respective one of the wheel arches (10, 11), in which slits (23, 24) the wheel axle (14) is movable.

## Patentansprüche

1. Vorrichtung zur Regulierung der Luftströmung unter einem sich bewegenden Fahrzeug (6), vorzugsweise für den Personentransport, mit einem ungeteilten und im wesentlichen geraden Heck, gekennzeichnet durch eine Führung (8), die unter dem rückwärtigen Teil (7) des Fahrzeugs (6) einen Kanal (9) für das Durchströmen vergleichsweise sauberer und trockener Luft auf einer nach oben gerichteten Bahn hinter das rückwärtige Teil (7) des Fahrzeugs (6) bildet und zugleich als Sperre ausgebildet ist, um den Kanal (9) gegenüber den Radkästen (10, 11) der Hinterräder (23, 24) des Fahrzeugs (6) abzuschirmen und Schmutz und Spritzwasser abzulenken, die durch die Hinterräder (12, 13) beim Fahren auf nasser Straße erzeugt werden.

2. Vorrichtung nach Anspruch 1, dadurch gekennzeichnet, daß die Wände der Führung (8) gebildet werden aus der Bodenplatte des rückwärtigen Teils (7), einer im wesentlichen horizontalen Platte (1), die unter der Bodenplatte angeordnet ist, und aus je einer vertikalen Platte (2, 3) an jeder Längskante der horizontalen Platte (1), wobei sich diese vertikalen Platten (2, 3) bis zu den entsprechenden Radkästen (10, 11) erstrecken.

3. Vorrichtung nach einem der vorangehenden Ansprüche, dadurch gekennzeichnet, daß der heckseitige Querkantenbereich (15) der horizontalen Platte (1) leicht nach oben gerichtet ist.

4. Vorrichtung nach einem der vorangehenden Ansprüche, dadurch gekennzeichnet, daß im Inneren jedes Radkastens (10) bzw. (11) je ein erstes vertikales Plattenelement (19) bzw. (20) angeordnet ist, die neben den ihnen jeweils zugeordneten vertikalen Platten (2) bzw. (3) der Führung (8) angeordnet sind, um den zugehörigen Radkasten (10, 11) gegenüber der Unterseite des Fahrzeugs (6) abzuschirmen.

5. Vorrichtung nach Anspruch 4, dadurch gekennzeichnet, daß angrenzend an die ersten vertikalen Plattenelemente (19) bzw. (20) zweite vertikale Plattenelemente (21) bzw. (22) in den jeweiligen Radkästen (10, 11) auf der Hinterachse (14) des Fahrzeugs (6) angebracht und so angeordnet sind, um die Spalte (23) bzw. (24) zu schließen, die in den ersten vertikalen Plattenelementen (19) bzw. (20) in den jeweiligen Radkästen (10, 11) gebildet sind und in denen die Radachse (14) bewegbar ist.

## Revendications

1. Dispositif de régulation de l'air circulant sous un véhicule en déplacement (6), en particulier une voiture particulière ayant une face arrière en une seule partie et essentiellement droite, caractérisé par un conduit (8) qui est positionné sous la partie arrière (7) du véhicule (6) et forme un canal (9) pour l'écoulement d'air comparativement propre et sec à travers lui suivant une trajectoire vers le haut derrière la partie arrière (7) du véhicule (6) et qui en même temps est conçu pour agir en tant que barrière formant un écran de séparation entre les ailes (10, 11) des roues arrières (12, 13) du véhicule (6) et ledit canal (9) et déviant les projections de boue et d'eau engendrées par les roues arrières (12, 13) lorsqu'elles se déplacent sur une surface de route mouillée.

2. Dispositif selon la revendication 1, caractérisé en ce que les parois du conduit (8) sont formées par la tôle de fond de la partie arrière (7), par une plaque essentiellement horizontale (1) positionnée sous ladite tôle, et par des plaques verticales (2, 3), une à chaque bord longitudinal de la plaque horizontale (1), lesdites plaques verticales (2, 3) s'étendant jusqu'à leur aile respective des ailes (10, 11).

3. Dispositif selon l'une quelconque des revendications précédentes, caractérisé en ce que la portion de bord transversal (15) de la face arrière de la plaque horizontale (1) est dirigée légèrement vers le haut.

4. Dispositif selon l'une quelconque des revendications précédentes, caractérisé en ce qu'à l'intérieur de chacune des ailes (10 et 11, respectivement), est arrangé un premier organe de plaque verticale (19 et 20, respectivement), lesdits premiers organes de plaque (19, 20) étant juxtaposés par rapport à leur plaque verticale associée des plaques verticales (2 et 3, respectivement) du conduit (8) et arrangés pour former un écran de séparation entre leur aile associée (10, 11) et la face inférieure du véhicule (6).

5. Dispositif selon la revendication 4, caractérisé en ce que des seconds organes de plaque verticale (21 et 22, respectivement) sont montés sur l'essieu arrière (14) du véhicule (6) en position adjacente aux premiers organes de plaque verticale (19 et 20, respectivement) dans les ailes respectives (10, 11), lesdits seconds organes de plaque verticale (21, 22) étant arrangés pour fermer des fentes (23 et 24, respectivement) formées dans les premiers organes de plaque verticale (19 et 20, respectivement) dans leur aile respective des ailes (10, 11), l'essieu arrière (14) étant mobile dans ces fentes (23, 24).
